# EUROPÄISCHE PATENTANMELDUNG

(11) **EP 3 348 322 A1**
(43) Veröffentlichungstag der Anmeldung: **18.07.2018**
(21) Anmeldenummer: 17151687.5
(22) Anmeldetag: 16.01.2017
(51) Int. Cl.: B01D 67/00, B01D 53/22, B01D 69/14, B01D 71/02

(54) **HERSTELLUNGSVERFAHREN FÜR MECHANISCH STABILE PERKOLATIONSMEMBRANEN**

(71) Anmelder: Leibniz Universität Hannover, 30167 Hannover (DE)
(72) Erfinder: Caro, Jürgen, 13129 Berlin (DE); Friebe, Sebastian, 30177 Hannover (DE); Mundstock, Alexander, 30173 Hannover (DE)
(74) Vertreter: Taruttis, Stefan Georg

(57) **Zusammenfassung**

Die Erfindung betrifft ein Herstellungsverfahren für mechanisch stabile Perkolationsmembranen, die für zumindest ein Gas durchlässig sind, mit dem Verfahren hergestellte Membranen und Verfahren zur Gasbehandlung, insbesondere zur Trennung des Gases aus einer Gasmischung mittels der Membranen. Die Membranen weisen poröse Kristalle auf, die für das Gas permeabel sind, die z.B. Molekularsiebe wie Zeolithe und metallorganische Gerüststrukturen.

## Beschreibung

Die Erfindung betrifft ein Herstellungsverfahren für mechanisch stabile Perkolationsmembranen, die für zumindest ein Gas durchlässig sind, mit dem Verfahren hergestellte Membranen und Verfahren zur Gasbehandlung, insbesondere zur Trennung des Gases aus einer Gasmischung mittels der Membranen. Die Membranen weisen poröse Kristalle auf, die für das Gas permeabel sind, die z.B. Molekularsiebe wie Zeolithe, metallorganische Gerüststrukturen (MOF, Metal-Organic-Framework) oder eine Mischung von zumindest zweien dieser sind.

Das Herstellungsverfahren hat den Vorteil einfacher Verfahrensschritte, vergleichsweise geringer Kosten und einer hohen Reproduzierbarkeit. Die Membranen haben den Vorteil einer hohen mechanischen Stabilität und einer Selektivität, die im Wesentlichen durch die permeablen Kristalle bestimmt wird, bei einem guten Stoffdurchgang und vergleichbar mit herkömmlich auf einem Träger gewachsenen Membranen sind. Zudem lassen sich mit dem Herstellungsverfahren Membranen herstellen, die mit den gängigen und/oder aufwändigeren Methoden nicht produzierbar sind.

### Stand der Technik

Die WO 2009/14248 A2 und die US 7476635 B2 beschreiben die Aufkristallisation von Zeolith auf einen anorganischen Träger zur Herstellung von Membranen, die z.B. für die Gastrennung eingesetzt werden können.

Die US 2013/0313193 A1 beschreibt die solvothermale Aufkristallisation von Zeolith auf poröse Träger, die Polymere sein können, nach deren Behandlung mit Nanokristallen als Kristallisationsstarter.

Die US 9248400 B2 beschreibt die Synthese von ZIF auf Trägern.

Die bekannten Membranen, die auf einen Träger aufkristallisierte Zeolithkristalle aufweisen, haben den Nachteil einer geringen Reproduzierbarkeit defektfreier Zeolithschichten, die für eine gute Gastrennung erforderlich sind, und erfordern ein komplexes Herstellungsverfahren oder sind erst gar nicht über solche Verfahren herzustellen.

Die WO 2008/066939 A2 beschreibt für Mixed-Matrix-Membranen, die aus in Kunststoff eingebetteten Zeolithen bestehen, eine Verbesserung durch Funktionalisierung der Zeolithkristalle, z.B. mittels Organosilanen, vor deren Einmischen in den Kunststoff.

Mixed-Matrix-Membranen sind auf Füllgehalte von maximal ca. 50 % Kristalle beschränkt, um eine ausreichende mechanische Festigkeit zu erhalten. Zudem kann es theoretisch ab 33% Füllstoffgehalt zu unselektiver Perkolation kommen.

### Aufgabe der Erfindung

Der Erfindung stellt sich die Aufgabe, ein alternatives Herstellungsverfahren für Membranen mit porösen Kristallen und eine alternative Membran mit porösen Kristallen bereitzustellen, wobei das Herstellungsverfahren bevorzugt einfach ist und reproduzierbare Membranen ergibt, die bevorzugt eine hohe mechanische Stabilität, eine gute Selektivität und hohe Permeanz aufweisen. Weiter bevorzugt wird die Selektivität bei Gastrennungen durch die in der Membran enthaltenen porösen Kristalle und deren Packung im Komposit bestimmt.

### Beschreibung der Erfindung

Die Erfindung löst die Aufgabe mit den Merkmalen der Ansprüche, insbesondere mittels eines Herstellungsverfahrens für eine Membran, die eine erste Oberfläche und eine beabstandete zweite Oberfläche aufweist, die für zumindest ein Gas einer Gasmischung durchlässig ist, mit den Schritten
1. Pressen von porösen Kristallen zu einem Formkörper,
2. optional Vernetzen der Kristalle in dem Formkörper, z.B. durch Zusatz eines zumindest bifunktionalen Vernetzungsmittels,
3. anschließend Einbringen einer härtenden Kunststoffmasse in die Zwischenräume des Formkörpers mit
4. Zugänglichmachen der porösen Kristalle in der ersten und zweiten Oberfläche vor oder nach dem Einbringen der Kunststoffmasse in Schritt 3.

Dabei dient das Pressen der Kristalle dazu, die Kristalle in einen Formkörper zu bringen, in dem sie unmittelbar aneinander anliegen und zwischen sich Zwischenräume bilden. Das Pressen kann uniaxial sein, z.B. zwischen einem Stempel und einer Matrize oder mittels eines Extruders erfolgen. Optional wird der Pressdruck während des optionalen Vernetzens und/oder während des Einbringens der härtenden Kunststoffmasse in den Formkörper aufgebracht.

Das Vernetzen kann z.B. das Erzeugen einer Amidkupplung zwischen den Kristallen, eine Iminkondensation, Ausbildung von Harnstoffbrücken, Bromierung, N-Alkylierung und/oder eine Click-Reaktion sein. Das optionale Vernetzungsmittel kann z.B. Ethylendiamin sein. Eine für das Vernetzen notwendige Temperaturerhöhung kann während des Pressens oder nach dem Pressen erfolgen, z.B. während des Einbringens oder nach dem Einbringen der härtenden Kunststoffmasse, z.B. als Erwärmung zur Aktivierung der Kristalle oder als Erwärmung während eines Verfahrens zu Gasbehandlung mit der Membran.

Weiter optional kann vor dem Pressen ein Presshilfsmittel zugesetzt werden, bevorzugt mit dem Schritt des Abbrennens des Presshilfsmittels, z.B. in Luft bei 500 - 600 °C, nach dem Pressen.

Das Einbringen einer härtenden Kunststoffmasse in die Zwischenräume zwischen den gepressten Kristallen des Formkörpers füllt diese Zwischenräume und bildet einen Verbund der gehärteten Kunststoffmasse mit dem gepressten Formkörper der Kristalle. Die Kunststoffmasse ist bevorzugt für zumindest ein Gas aus einer zu trennenden Gasmischung undurchlässig, weiter bevorzugt im Wesentlichen für Gase undurchlässig.

Die erste und zweite Oberfläche weisen jeweils nicht von Kunststoffmasse bedeckte Kristalle auf, z.B. unbedeckte Kristalloberflächen oder durch Abtragen erzeugte Flächen der Kristalle des Formkörpers, so dass ein Gas, das Bestandteil einer Gasmischung ist, in der ersten und zweiten Oberfläche unmittelbar in die Kristalle bzw. aus den Kristallen treten kann.

Das Zugänglichmachen der porösen Kristalle in der ersten und zweiten Oberfläche kann dadurch erfolgen, dass nach dem Einbringen der Kunststoffmasse in die Zwischenräume des Formkörpers und Härten der Kunststoffmasse die erste Oberfläche und/oder die zweite Oberfläche durch Abtragen der Kunststoffmasse und des darin enthaltenen Formkörpers bis in die Ebene der ersten und/oder zweiten Oberfläche erzeugt wird, z.B. durch Schleifen, Fräsen Schneiden oder Bohren. Das Abtragen erfolgt nach zumindest teilweiser Härtung der Kunststoffmasse, bevorzugt nach deren vollständiger Härtung. Dabei kann der Formkörper nach dem Pressen aus der Presse entfernt werden oder in der Presse verbleiben, optional mit anliegendem Pressdruck. Anschließend kann die Kunststoffmasse in den gepressten Formkörper eingebracht werden, in dem der gepresste Formkörper mit der Kunststoffmasse getränkt wird, bzw. die Kunststoffmasse kann auf den Formkörper aufgetragen und in den Formkörper einziehen gelassen werden, der Formkörper kann vakuumiert und anschließend mit Kunststoffmasse kontaktiert bzw. imprägniert werden und/oder der gepresste Formkörper kann mit Kunststoffmasse kontaktiert und mit Druck in den Formkörper gepresst werden.

Optional, z.B. wenn das Zugänglichmachen durch Abtragen geschieht, wird die härtende Kunststoffmasse in den Formkörper eingebracht, bis die Kunststoffmasse die Zwischenräume des Formkörpers vollständig ausfüllt und/oder bis die Kunststoffmasse den Formkörper vollständig umschließt.

Alternativ kann das Zugänglichmachen der porösen Kristalle in der ersten und/oder zweiten Oberfläche dadurch erfolgen, dass die Flächen der Kristalle, die direkt in der ersten und/oder zweiten Oberfläche liegen, während des Einbringens der härtenden Kunststoffmasse abgedeckt sind, z.B. dadurch, dass der Formkörper zumindest in der Ebene der ersten und/oder zweiten Oberfläche von jeweils einer Arbeitsfläche einer inerten Pressform, z.B. Teflon oder Edelstahl, belastet ist, während die Kunststoffmasse in die Zwischenräume eingebracht wird. In dieser Ausführungsform deckt eine Arbeitsfläche einer Pressform die daran anliegenden Kristalle im Bereich der ersten und/oder zweiten Oberfläche ab, so dass dieser Bereich nicht von Kunststoffmasse überdeckt wird.

Die in die Zwischenräume des Formkörpers eingebrachte härtende Kunststoffmasse schließt diese Zwischenräume und es hat sich gezeigt, dass eine mit dem Verfahren hergestellte Membran Permeationseigenschaften hat, die im Wesentlichen durch die Kristalle bestimmt werden. Durch das Pressen der Kristalle liegen deren Oberflächen in der hergestellten Anordnung direkt aneinander an und bilden durchgehende Permeationspfade bzw. Perkolationspfade, die in der ersten und zweiten Oberfläche münden und von der Kunststoffmasse einfasst sind. Zwischen den Kristallen gebildete Zwischenräume sind durch die Kunststoffmasse ausgefüllt und erlauben daher maximal eine Diffusion durch die Kunststoffmasse bzw. sind mit gasdichter Kunststoffmasse gefüllt.

Durch die härtende Kunststoffmasse weist die erfindungsgemäß hergestellte Membran eine gute mechanische Festigkeit auf. Die erfindungsgemäß hergestellte Membran weist eine höhere mechanische Festigkeit auf, als der gepresste Formkörper vor dem Einfüllen der Kunststoffmasse oder als die geträgerte kristalline Membran, z.B. Zeolith oder MOF auf α-Al₂O₃.

Es hat sich gezeigt, dass das Einfüllen der härtenden Kunststoffmasse nicht zu einer wesentlichen Blockierung der Poren innerhalb der Kristalle führt und bevorzugt auch nicht zu einer Unterbrechung der Kontaktflächen, an denen die Kristalle in der gepressten Anordnung aneinander anliegen.

Die Kunststoffmasse kann z.B. härtendes Epoxidharz, Polyimid, Polyamid, Polyimidazol, Polysiloxan, Kautschuk, z.B. Naturkautschuk, oder eine Mischung von zumindest zweien dieser sein.

Die porösen Kristalle sind z.B. ein Zeolith, z.B. Zeolith X, LTA, MFI oder MOF, z.B. ZIF oder MIL, oder eine Mischung von zumindest zweien dieser. Die porösen Kristalle unterliegen für die Herstellung der Membranen keiner Größenlimitierung, da die Dicke der Membran durch Abtragen und/oder durch die Presse einstellbar bleibt. Die Kristalle können in den Größen eingesetzt werden, die bei Synthesen erhalten werden. Üblicherweise werden Größen von unter 100 nm bis hin zu über 10 µm bei hydrothermalen Synthesen hergestellt.

Ein Vorteil des Verfahrens liegt darin, dass sich Membranen mit porösen Kristallen herstellen lassen, die sich nicht in homogener Schicht auf einem Träger erzeugen lassen.

Bevorzugt sind die porösen Kristalle vor dem Pressen aktiviert, insbesondere durch Entfernen von Wasser oder Lösungsmittel aus den Poren, z.B. durch Evakuieren und/oder Überspülen mit Inertgas, z.B. bei einer Temperatur von zumindest 100 °C, bevorzugt zumindest 150 °C. Alternativ können die porösen Kristalle in den Poren eingeschlossenes Wasser oder Lösungsmittel enthalten und der Formkörper wird nach dem Pressen von Schritt 1, optional direkt nach Zusetzen eines Vernetzungsmittels in Schritt 2 aktiviert, oder die Membran wird nach Schritt 4 aktiviert.

Die erfindungsgemäße Membran, die mit dem Herstellungsverfahren erhältlich ist, weist eine erste Oberfläche und eine davon beabstandete zweite Oberfläche auf, in der jeweils poröse Kristalle liegen, wobei die Kristalle zwischen der ersten und zweiten Oberfläche unmittelbar aneinander anliegen, z.B. aneinander gepresst sind, wobei die Zwischenräume zwischen den Kristallen durch eine gehärtete Kunststoffmasse ausgefüllt sind, die bevorzugt gasdicht ist. Die in der ersten und zweiten Oberfläche liegenden Kristalle sind unmittelbar zugänglich und insbesondere nicht von Kunststoffmasse überdeckt.

Die erste und die zweite Oberfläche der Membran können durch Materialabtrag bis in die Ebene erzeugt sein, in der die erste und zweite Oberfläche liegen.

Generell können die erste und zweite Oberfläche jede Form aufweisen, z.B. plan oder gebogen, insbesondere zylindrisch. Bevorzugt bilden die erste und zweite Oberfläche die gegenüberliegenden Flächen der Membran, die weiter bevorzugt eine konstante Dicke zwischen der ersten und der zweiten Oberfläche aufweist. Alternativ können die erste und die zweite Oberfläche voneinander beabstandet auf gegenüberliegenden Seiten der Membran oder auf derselben Seite der Membran angeordnet sein.

Die Flächen der Membran, die nicht die erste und zweite Oberfläche bilden, sind bevorzugt von der Kunststoffmasse überzogen.

Weiter betrifft die Erfindung Verfahren zu Behandlung von Gasmischungen, insbesondere die Abtrennung eines Gases aus einer Gasmischung, mittels der Membran. Dabei wird eine Gasmischung, die zumindest zwei Gase als Komponenten enthält, gegen die erste Oberfläche der Membran gedrückt und eines der Gase von der zweiten Oberfläche weggeführt, optional mit Hilfe eines Spülgases, das die zweite Oberfläche überströmt.

Die Erfindung wird nun genauer anhand von Beispielen mit Bezug auf die Figuren beschrieben, die in
- Figur 1 ein Schema des Verfahrens und der Membran gemäß der Erfindung,
- Figur 2 elektronenmikroskopische Aufnahmen und eine Aufnahme der energiedispersiven Röntgenfluoreszenz einer beispielhaften Membran,
- Figur 3 zum Vergleich ein elektronenmikroskopische Aufnahme einer Zeolith X-Schicht auf einem porösen α-Al₂O₃-Träger und
- Figur 4 elektronenmikroskopische Aufnahmen und eine Aufnahme der energiedispersiven Röntgenfluoreszenz einer weiteren beispielhaften Membran zeigen.

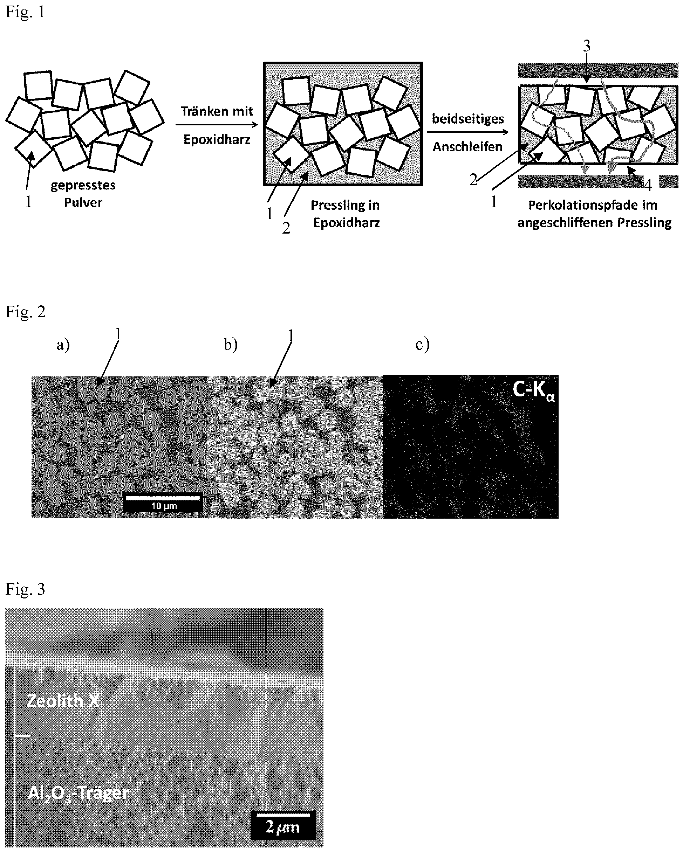

In Figur 1 ist schematisch in a) ein Formkörper aus Kristallen 1 im Schnitt gezeigt, der durch Pressen eines Pulvers der Kristalle 1 gemäß Schritt 1 hergestellt werden kann. In dem Formkörper liegen die Kristalle 1 unmittelbar aneinander an und bilden zwischen sich Zwischenräume. In den Formkörper aus den Kristallen 1 wird in b) Epoxidharz als härtende Kunststoffmasse 2 gemäß Schritt 3 eingebracht, wodurch die Zwischenräume der Kristalle 1 mit der Kunststoffmasse 2 ausgefüllt werden und der Formkörper von der Kunststoffmasse 2 abgedeckt wird. Das Anschleifen an zwei gegenüberliegenden Seiten erzeugt die in c) gezeigte erste Oberfläche 3 und die beabstandete zweite Oberfläche 4, die jeweils senkrecht zur gezeigten Schnittebene liegen, wobei die in den ersten und zweiten Oberflächen 3, 4 angeordneten Kristalle 1 zugänglich sind. Die im Formkörper unmittelbar aneinander anliegenden Kristalle 1 bilden Perkolationspfade (durch Pfeile angedeutet) für ein Gas, deren Eigenschaften, insbesondere die Selektivität, durch die Kristalle bestimmt sind.

### Beispiel 1: Membran mit Zeolith X

Als Beispiel für Kristalle wird Zeolith X (Synonym FAU) nach Robson, Synthesis Commission of the International Zeolite Association 2001, Verified Syntheses of Zeolitic Materials in Pulverform mit einer Kristallgröße von etwa 1 bis 5 µm synthetisiert und durch Erwärmen aktiviert. 400 mg dieses Pulvers werden uniaxial in einer Presse bei 200 MPa für 10 min zu einer runden Platte von 1 mm Dicke und 18 mm Durchmesser gepresst. Bei Raumtemperatur wird Epoxidharz EPO-TEK 353ND oder EPO-TEK 301, erhältlich von EPOXY TECHNOLOGY INC., Billerica, USA, auf eine der beiden Flächen oder auf beide Flächen der Platte aufgetragen und saugt sich selbsttätig in den Formkörper. Nach dem Aushärten, optional durch Erwärmen auf 150 °C für 1 h, werden die bedeckten Flächen der Platte mit einer Schleifmaschine, Schleifscheibe 30 µm Körnung, angeschliffen, um die erste und gegenüberliegende zweite Oberfläche herzustellen, in der Zeolithkristalle liegen und angeschliffen sind.

In Figur 2 ist in a) eine rasterelektronenmikroskopische Aufnahme einer angeschliffenen Oberfläche der so hergestellten Membran gezeigt, in b) zur Kontrasterhöhung derselbe Abschnitt der rasterelektronenmikroskopischen Aufnahme eingefärbt. Diese Aufnahmen, in denen die Kristalle 1 hell in der dunkleren Kunststoffmasse gezeigt sind, machen deutlich, dass die Zeolithkristalle 1 offen zugänglich in der Oberfläche liegen und die Zwischenräume zwischen den Kristallen 1 von dem Epoxidharz ausgefüllt sind. Figur 2 c) zeigt die energiedispersive zweidimensionale Röntgenfluoreszenz im Abbildungsmodus. Die Kohlenstoffsignale C-K_{α} zeigen das Epoxid an und machen deutlich, dass die Kristalle 1 des Zeolith X keinen Kohlenstoff enthalten.

Die Gaspermeation für diese Membran wurden bei 23 °C mit einem 50%/50% H₂/CO₂-Gemisch nach Wicke-Kallenbach, 1 mL/min N₂ als Spülgas, gemessen. Die Permeanz für Wasserstoff betrug 1 x 10⁻⁸ mol m⁻² Pa⁻¹. Der Gemischtrennfaktor H₂/CO₂ betrug 11.

Als Vergleich wurde das Zeolith X-Pulver zu 95 Gew.-% mit 5 Gew.-% des Epoxidharzes gemischt und erst dann zu Platten verpresst und nach dem Aushärten beidseitig angeschliffen. An solchen Vergleichsplatten wurde im ansonsten gleichen Aufbau keine Gaspermeation festgestellt. Dies wird darauf zurückgeführt, dass ohne Pressen der Kristalle des Zeoliths zu einem Formkörper die Kristalle nicht unmittelbar aneinander angrenzen und daher das Epoxidharz die an sich porösen Kristalle dicht umschließt.

Zum Vergleich wurde eine defektfreie Schicht aus Zeolith X von ca. 3 µm Dicke auf einem porösen α-Al₂O₃-Träger von 1 mm Dicke aufkristallisiert. Dazu wurde der Träger in Polydopamin (PDA), 2 mg/mL in 50 mL Tris-HCl, pH 8,5, getaucht und in einem offenen Gefäß für 24 h bei Raumtemperatur unter kontinuierlichem Rühren inkubiert und anschließend bei Raumtemperatur getrocknet. Der so vorbehandelte Träger wurde in eine Syntheselösung gehängt und in einem teflonbeschichteten Autoklaven für 24 h bei 75 °C inkubiert. Die Syntheselösung wurde durch Lösen von 0,075 g Aluminiumfolie (>99 %, Merck) in 7,78 g NaOH (>99 %, Merck) in 25 g entionisiertem Wasser unter Rühren und Mischen mit einer zweiten Lösung versetzt und bis zur Homogenität ca. 12 h gerührt. Die zweite Lösung wurde aus 4,17 g LUDOX AS-40 kolloidalem Silika (40 % SiO₂ in Wasser, Aldrich) und 22,22 g entionisiertem Wasser durch Rühren für 2 h bei 60 °C hergestellt. Nach der Synthese im Autoklaven wurden die Träger zum Waschen für 24 h in entionisiertes Wasser gehängt und anschließend für 2 h bei 60 °C getrocknet.

Ein elektronenmikroskopisches Bild eines Querschnitts der Zeolithschicht auf dem Träger ist in Figur 3 gezeigt, darin die Kristalle 1 hell in der umgebenden Kunststoffmasse.

Unter gleichen Bedingungen wurde für diese Vergleichsmembran eine niedrigere Permeanz für Wasserstoff von 6,4 x 10⁻⁹ mol m⁻² Pa⁻¹ und ein geringerer Gemischtrennfaktor H₂/CO₂ von 10,3 bestimmt.

Als weiterer Vergleich wurde eine Mixed-Matrix-Membran aus Polyimid mit 10 Gew.-% Zeolith X hergestellt. Der Zeolith X fiel bei der vorgenannten Autoklav-Synthese als Bodensatz an und wurde in entionisiertem Wasser gewaschen und bei 60 °C getrocknet. Als Polyimid wurde Matrimid 5218 (erhältlich von Ciba-Geigy) in Dichlormethan gelöst mit dem pulverförmigen Zeolith X gemischt und 12 h gerührt und mit Ultraschall beaufschlagt, um Gasblasen zu entfernen. Die Mischung wurde auf einen unbehandelten porösen α-Al₂O₃-Träger von 1 mm Dicke aufpipettiert und in Dichlormethanatmosphäre langsam trocknen gelassen. Die Schichtdicke betrug nach elektronenmikroskopischen Aufnahmen etwa 100 µm. Für diese Mixed-Matrix-Membran wurde unter denselben Bedingungen, jedoch mit 1 mL/min N₂ als Spülgas. Die Permeanz für Wasserstoff wurde zu 1,7 x 10⁻¹⁰ mol m⁻² Pa⁻¹ bestimmt und der Gemischtrennfaktor H₂/CO₂ zu 4. Diese Vergleiche zeigen, dass die erfindungsgemäß hergestellte Membran bessere Trenneigenschaften hat.

### Beispiel 2: Membran mit MOF MIL-140A

Als Kristalle wird das pulverförmige MOF MIL-140A mit plättchenförmiger Kristallgeometrie von 0,1 µm x 3 µm x 3 µm synthetisiert, wie in Serre et al., Angew. Chemie Int Ed. 51 (2012) 9267 beschrieben. 400 mg dieses Pulvers werden uniaxial in einer Presse bei 200 MPa für 10 min zu einer runden Platte von 1 mm Dicke und 18 mm Durchmesser gepresst. Bei Raumtemperatur wird Epoxidharz EPO-TEK 353ND oder EPO-TEK 301 auf beide Flächen der Platte aufgetragen und die Platte wird nach Aushärten auf beiden Flächen angeschliffen, wie in Beispiel 1 beschrieben.

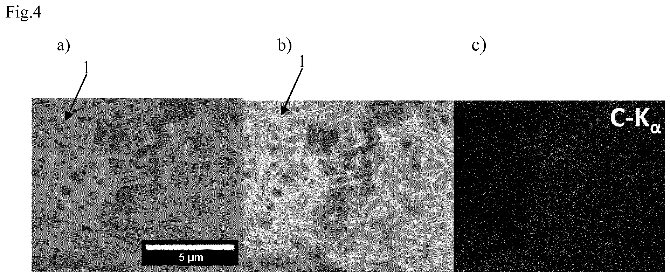

In Figur 4 a) ist eine rasterelektronenmikroskopische Aufnahme einer angeschliffenen Oberfläche gezeigt, in Figur 4 b) derselbe Ausschnitt mit Färbung. Figur 4 c) zeigt die Kohlenstoffsignale C-K_{α}, die das Epoxid anzeigen und deutlich machen, dass die Kristalle des MIL-140 überwiegend keinen Kohlenstoff und entsprechend kein Epoxid enthalten.

Die Messung der Gaspermeation entsprechend Beispiel 1 ergab eine Permeanz für Wasserstoff von 2 x 10⁻⁸ mol m⁻² Pa⁻¹ und einen Gemischtrennfaktor H₂/CO₂ von 8.

Für ein 50 %/50 % H₂/CH₄-Gasgemisch wurde unter ansonsten gleichen Bedingungen dieselbe Permeanz für Wasserstoff und ein Gemischtrennfaktor von 7,7 bestimmt.

## Patentansprüche

1. Herstellungsverfahren für eine Membran, die eine erste und eine beabstandete zweite Oberfläche (3, 4) aufweist, mit den Schritten
1. Pressen von porösen Kristallen (1) zu einem Formkörper,
2. optional Vernetzen der Kristalle (1) in dem Formkörper,
3. anschließend Einbringen einer härtenden Kunststoffmasse (2) in die Zwischenräume des Formkörpers und
4. Zugänglichmachen der porösen Kristalle (1) in der ersten und zweiten Oberfläche.

2. Herstellungsverfahren nach Anspruch 1, **dadurch gekennzeichnet, dass** das Zugänglichmachen nach Schritt 3 durch Abtragen der Kunststoffmasse (2) bis in die Ebene der ersten und zweiten Oberfläche (3, 4) erfolgt.

3. Herstellungsverfahren nach einem der voranstehenden Ansprüche, **dadurch gekennzeichnet, dass** das Zugänglichmachen dadurch erfolgt, dass die Flächen der Kristalle (1), die in der Ebene der ersten und zweiten Oberfläche (3, 4) liegen, vor dem Einbringen der härtenden Kunststoffmasse (2) in Schritt 3 abgedeckt werden.

4. Herstellungsverfahren nach einem der voranstehenden Ansprüche, **dadurch gekennzeichnet, dass** die härtende Kunststoffmasse dadurch in die Zwischenräume eingebracht wird, dass die härtende Kunststoffmasse auf zumindest eine Fläche des Formkörpers aufgetragen wird und einziehen gelassen wird.

5. Herstellungsverfahren nach einem der voranstehenden Ansprüche, **dadurch gekennzeichnet, dass** die Kristalle in dem Formkörper vernetzt werden.

6. Herstellungsverfahren nach einem der voranstehenden Ansprüche, **dadurch gekennzeichnet, dass** die Kunststoffmasse nach dem Aushärten gasdicht ist.

7. Herstellungsverfahren nach einem der voranstehenden Ansprüche, **dadurch gekennzeichnet, dass** die Kunststoffmasse nach dem Aushärten für ein Gas aus einer Gasmischung permeabel ist.

8. Herstellungsverfahren nach einem der voranstehenden Ansprüche, **dadurch gekennzeichnet, dass** die Kristalle vor dem Pressen oder nach dem Pressen aktiviert werden.

9. Membran, insbesondere erhältlich nach einem Herstellungsverfahren gemäß einem der voranstehenden Ansprüche, die eine erste und eine beabstandete zweite Oberfläche (3, 4) aufweist und die poröse Kristalle (1) enthält, **dadurch gekennzeichnet, dass** die Kristalle (1) in einem Formkörper angeordnet sind, in dem sie unmittelbar aneinander anliegen und dass Zwischenräume zwischen den Kristallen (1) von einer Kunststoffmasse (2) ausgefüllt sind, wobei Kristalle (1) in der ersten und zweiten Oberfläche (3, 4) unmittelbar zugänglich sind.

10. Membran nach Anspruch 9, **dadurch gekennzeichnet, dass** die Kristalle in dem Formkörper miteinander vernetzt sind.

11. Membran nach einem der Ansprüche 9 bis 10, **dadurch gekennzeichnet, dass** die erste und die zweite Oberfläche (3, 4) in einem Abstand voneinander auf derselben Seite der Membran angeordnet sind, oder auf gegenüberliegenden Seiten der Membran.

12. Membran nach einem der Ansprüche 9 bis 10, **dadurch gekennzeichnet, dass** die Kristalle (1) Zeolith X, LTA, MFI, ZIF, MIL, oder eine Mischung von zumindest zweien dieser sind.

13. Membran nach einem der Ansprüche 9 bis 10, **dadurch gekennzeichnet, dass** die Kunststoffmasse (2) nach der Härtung gasdicht ist oder für ein Gas einer Gasmischung permeabel ist.

14. Verfahren zu Behandlung einer Gasmischung, **gekennzeichnet durch** Kontaktieren der Gasmischung mit einer Membran nach einem der Ansprüche 9 bis 13 an deren ersten Oberfläche (3) und Durchtreten lassen eines Gasbestandteils der Gasmischung **durch** die Membran bis zu deren zweiter Oberfläche (4).
